# FASCICULE DE BREVET EUROPEEN

(11) **EP 0 522 973 B1**
(45) Date de publication et mention de la délivrance du brevet: **30.08.1995**
(21) Numéro de dépôt: 92402009.2
(22) Date de dépôt: 10.07.1992
(51) Int. Cl.: B23C 3/00, B23C 3/04, B23Q 27/00

(54) **Procédé et dispositif de réalisation d'un élément de connecteur coaxial muni d'au moins un téton**
Verfahren und Vorrichtung zur Herstellung eines mit mindestens einem Stift versehenen, koaxialen Verbindungselementes
Process and device to realise a coaxial connexion element with at least one peg

(30) Priorité: 12.07.1991 FR 9108810
(43) Date de publication de la demande: 13.01.1993
(73) Titulaire: RADIALL, Société Anonyme dite:, 93116 Rosny-Sous-Bois (FR)
(72) Inventeur: Durand, Jean-Claude, F-38500 Voiron (FR)
(74) Mandataire: Leszczynski, André

(56) Documents cités:
- DE-C- 49 170
- US-A- 2 126 476

## Description

L'invention a pour objet un procédé de réalisation d'au moins un téton sur un corps cylindrique, ainsi qu'un dispositif pour la mise en oeuvre de ce procédé.

On connait des systèmes de verrouillage à baïonnette de deux corps cylindriques, dont l'un comporte sur sa surface un téton en saillie et généralement deux tétons diamétralement opposés, et l'autre est muni de rampes et d'encoches de verrouillage pour recevoir le ou les tétons. Ces systèmes de verrouillage à baïonnette sont utilisés en particulier dans les connecteurs coaxiaux communément désignés sous le terme BNC. Dans les systèmes de verrouillage connus, les tétons sont de forme cylindrique d'axe perpendiculaire à celui du corps cylindrique sur lequel les tétons sont réalisés.

Dans les procédés connus pour réaliser un corps cylindrique comportant des tétons cylindriques en saillie de sa surface extérieure, on réalise une ébauche de corps cylindrique comportant une collerette périphérique de diamètre extérieur égal à celui des tétons à obtenir et de largeur supérieure au diamètre de la base des tétons à obtenir, on réalise les tétons par fraisage et l'on enlève l'excédent de matière de la collerette en laissant subsister les tétons.

L'inconvénient des procédés connus est que leur mise en oeuvre demande plusieurs opérations d'usinage à l'aide d'outils différents, entre lesquelles l'ébauche à usiner doit être reprise.

En particulier les procédés antérieurs ne permettent pas d'usiner le ou les tétons pendant la rotation de l'ébauche dans le tour d'usinage sur lequel elle est réalisée, par exemple pendant les opérations d'alésage (perçage) de la pièce.

L'invention remédie aux inconvénients précités en proposant un procédé de réalisation d'au moins un téton sur un corps cylindrique, permettant l'usinage du ou des tétons lors d'une rotation de l'ébauche de corps cylindrique notamment sur le tour d'usinage, ce qui permet de raccourcir le temps total d'usinage et donc d'assurer une fabrication plus économique.

Le procédé selon la revendication 1 se caractérise par le fait que l'on réalise le ou lesdits tétons et l'on enlève l'excédent de matière de la collerette au cours d'une seule opération d'usinage à l'aide d'au moins une fraise comportant une forme en creux et tournant autour d'un axe perpendiculaire à l'axe longitudinal de l'ébauche, en entraînant en rotation l'ébauche autour de son axe longitudinal et en entraînant la ou les fraises en rotation en sens opposé autour d'un second axe parallèle à l'axe longitudinal de l'ébauche, la ou lesdites fraises présentant une surface périphérique coupante sensiblement sphérique en contact avec la surface de l'ébauche, la vitesse tangentielle de rotation de ladite surface périphérique autour dudit second axe étant égale à la vitesse tangentielle de rotation de la surface extérieure de l'ébauche autour de son axe longitudinal.

Dans le procédé selon l'invention, on usine de manière avantageuse deux tétons diamétralement opposés sur ledit corps cylindrique au cours de la même opération d'usinage en utilisant de préférence deux fraises à surfaces coupantes sensiblement sphériques montées dans des positions diamétralement opposées sur un support tournant autour dudit second axe de rotation.

Un dispositif pour la mise en oeuvre du procédé selon la revendication 4 comporte au moins une fraise à surface de coupe sensiblement sphérique percée d'une cavité, montée rotative sur un support tournant autour d'un second axe perpendiculaire à l'axe de rotation de la ou des fraises et parallèle à l'axe de rotation de l'ébauche, et des moyens de synchronisation de la vitesse tangentielle de rotation de la ou des fraises autour du second axe avec la vitesse tangentielle de l'ébauche de corps cylindrique.

Dans un dispositif préféré selon l'invention, le diamètre enveloppe de la ou des fraises est un multiple du diamètre de l'ébauche de corps cylindrique.

Les corps cylindriques obtenus par le procédé selon l'invention comportent au moins un téton à portion de base cylindrique, en saillie de leur surface périphérique.

Un corps cylindrique obtenu par le procédé a un téton symétrique par rapport à deux plans perpendiculaires sur la majeure partie de sa hauteur et la section du téton a un premier plan de symétrie qui comporte deux segments de droite et la section du téton par le deuxième plan de symétrie comporte deux segments de développante.

L'invention sera mieux comprise au regard du dessin annexé donné à titre d'exemple nullement limitatif dans lequel :
- la figure 1 est une vue latérale schématique d'un corps de connecteur coaxial de la technique connue,
- la figure 2 est une vue avant schématique de l'extrémité d'un corps de connecteur coaxial selon la figure 1,
- la figure 3 est une vue latérale schématique d'un système de verrouillage à baïonnette de type connu,
- les figures 4 et 5 illustrent un procédé de réalisation de tétons selon la technique connue,
- les figures 6 et 7 illustrent un procédé de réalisation d'un téton selon l'invention,
- les figures 8 et 9 illustrent un procédé de réalisation de deux tétons selon l'invention,
- les figures 10 et 12 sont des vues schématiques analogues aux figures 2 et 3 d'une fiche de connecteur réalisée selon l'invention et du système de verrouillage associé, et
- la figure 11 est une vue schématique dans le sens de la flèche A de la figure 10.

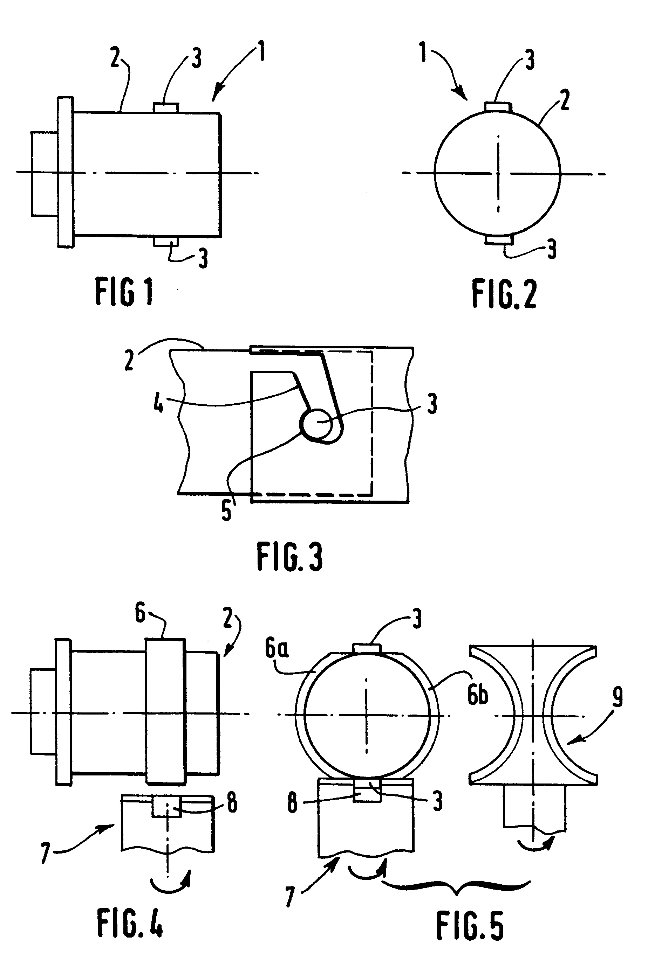

En référence aux figures 1 et 2, un élément 1 de connecteur coaxial mâle ou fiche à verrouillage à baïonnette réalisé selon la technique connue comporte un corps cylindrique 2 et deux tétons 3 diamétralement opposés de forme sensiblement cylindrique et d'axe perpendiculaire à celui du corps cylindrique 2. Selon la figure 3, un téton 3 apte à coulisser le long d'une rampe 4 est appliqué contre une encoche de verrouillage 5 de forme sensiblement circulaire.

La rampe 4 et l'encoche 5 sont réalisées dans la paroi d'un élément de connecteur femelle complémentaire.

Selon les figures 4 et 5, un procédé de réalisation de téton de la technique connue comporte l'usinage préalable d'une collerette 6 sur une ébauche de corps cylindrique 2, puis l'immobilisation en rotation ou le démontage de l'ébauche à usiner. Au moyen d'une fraise creuse 7 percée d'une cavité 8 correspondant en creux au diamètre du téton à usiner, on usine la collerette 6 immobilisée, comme représentée sur la partie de gauche de la figure 5 pour ainsi laisser subsister deux tétons diamétralement opposés 3. Les parties subsistantes 6a et 6b de la collerette 6 sont ensuite éliminées au moyen d'une fraise de forme 9 ou par un moyen quelconque équivalent tel que le brochage ou le fraisage à l'aide d'autres formes de fraises.

On constate ainsi que, selon la technique connue, il est nécessaire d'immobiliser ou de démonter l'ébauche pour réaliser les tétons 3 sur l'ébauche de corps cylindrique 2.

Le procédé selon l'invention permet au contraire de réaliser un ou des tétons sur une ébauche de corps cylindrique en rotation, notamment sur son tour d'usinage, sans arrêter la rotation de l'ébauche.

Ainsi, pendant que l'on usine les tétons extérieurement, on peut par exemple usiner l'intérieur du corps. Cette combinaison d'usinages permet ainsi de raccourcir le temps total d'usinage et de diminuer de façon importante le prix de revient des pièces usinées.

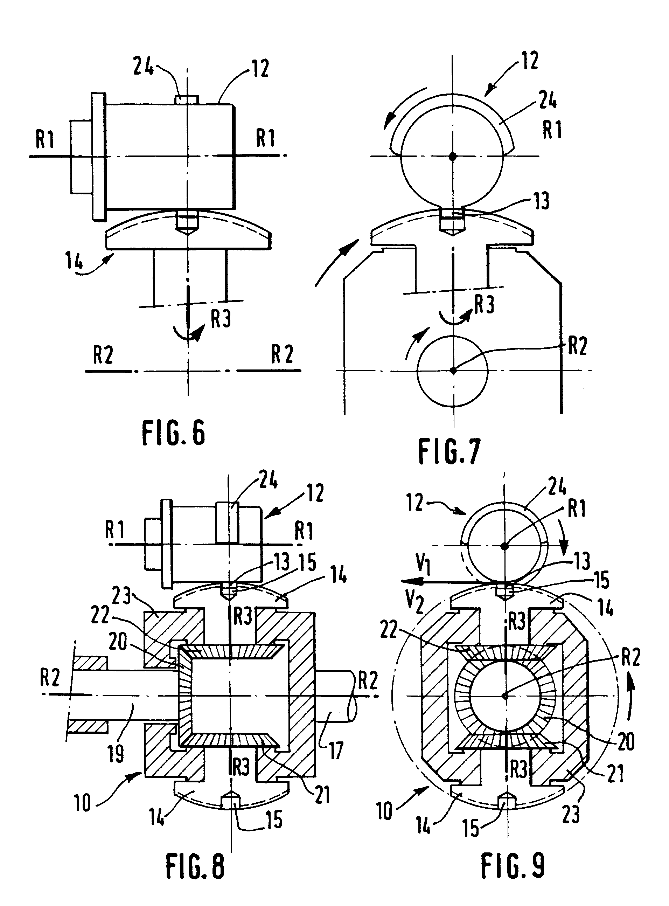

Selon les figures 6 et 7, l'ébauche de corps cylindrique 12 est entraînée en rotation autour de l'axe R1 par une machine motrice non représentée, qui peut avantageusement être le tour d'usinage de l'ébauche.

L'axe de rotation R1 est sensiblement confondu avec l'axe longitudinal de l'ébauche 12. On utilise une fraise 14 présentant une surface périphérique coupante sensiblement sphérique en rotation autour d'un axe R3.

Selon l'invention, on entraîne la fraise 14 en rotation autour d'un second axe R2 sensiblement parallèle à l'axe de rotation R1 de l'ébauche 12.

Pour éviter un arrachage de matière par la fraise, on adopte au point de contact une vitesse tangentielle autour de l'axe R2 égale à la vitesse tangentielle autour de l'axe R1, la fraise 14 et l'ébauche 12 tournant en sens opposés.

Le diamètre extérieur de la fraise 14 est destiné pour usiner la collerette 24 sur au moins un demi-tour de l'ébauche.

Il suffit dans ce cas que la fraise 14 passe devant l'ébauche dans une position diamétralement opposée au premier téton pour usiner un deuxième téton diamétralement opposé au premier et enlever l'excédent de matière de la collerette 24 au cours d'une seule opération d'usinage.

Selon les figures 8 et 9, on utilise un dispositif 10 d'usinage comportant deux fraises 14 diamétralement opposées munies d'une cavité 15. La cavité 15 entoure l'axe de rotation de la fraise 14, et sa forme est sensiblement cylindrique. Le profil extérieur de la fraise 14 présente une surface de coupe sensiblement sphérique. Des moyens de synchronisation de la vitesse de rotation du dispositif 10 autour de l'axe de rotation 17 permettent d'établir une relation synchrone entre la vitesse de rotation de l'ébauche de corps cylindrique 12 autour de son axe et la vitesse de rotation du dispositif 10 entraîné par l'arbre 17 autour de l'axe R2, l'ébauche de corps cylindrique 12 et le dispositif 10 tournent par conséquent en sens opposés et la vitesse linéaire tangentielle V2 au dispositif 10 à l'extrémité de la surface de coupe d'une fraise 14 est sensiblement égale à la vitesse linéaire tangentielle V1 à la surface extérieure du corps cylindrique 12.

La rotation des fraises 14 peut être obtenue de façon indépendante par un arbre d'entraînement 19 d'un train d'engrenages 20,21,22 montés dans un boîtier 23. On établit la relation de synchronisation entre la vitesse de rotation du dispositif 10 autour de l'arbre de rotation 17 et la vitesse de rotation de l'ébauche de corps cylindrique 12 de manière à pouvoir usiner le nombre de tétons souhaités dans la collerette 24, dont la largeur est supérieure à celle des tétons à réaliser.

Selon l'invention, une réalisation préférée du dispositif 10 comporte en combinaison deux fraises 14 dont le diamètre enveloppe est un multiple du diamètre de la pièce à usiner, de préférence un multiple impair pour usiner un nombre pair de tétons. Lorsque le diamètre enveloppe des fraises 14, représenté en traits mixtes sur la figure 9, est un multiple impair du diamètre de l'ébauche de corps cylindrique 12, la pièce à usiner accomplit un multiple impair du nombre de tours effectués par le dispositif 10. A titre d'exemple, les figures 8 et 9 représentent un dispositif où le diamètre enveloppe des fraises 14 est égal à trois fois le diamètre de l'ébauche de corps cylindrique 12. Cette disposition permet d'usiner deux tétons 13 diamétralement opposés en utilisant un montage dans lequel l'axe 19 et l'engrenage 20 sont fixes par rapport à la machine tel qu'un tour automatique entraînant en rotation l'ébauche de corps cylindrique 12. Dans ce cas, la vitesse de rotation des fraises 14 est fonction de la vitesse de rotation et également de la vitesse linéaire V2 du dispositif 10, entraîné par l'arbre 17.

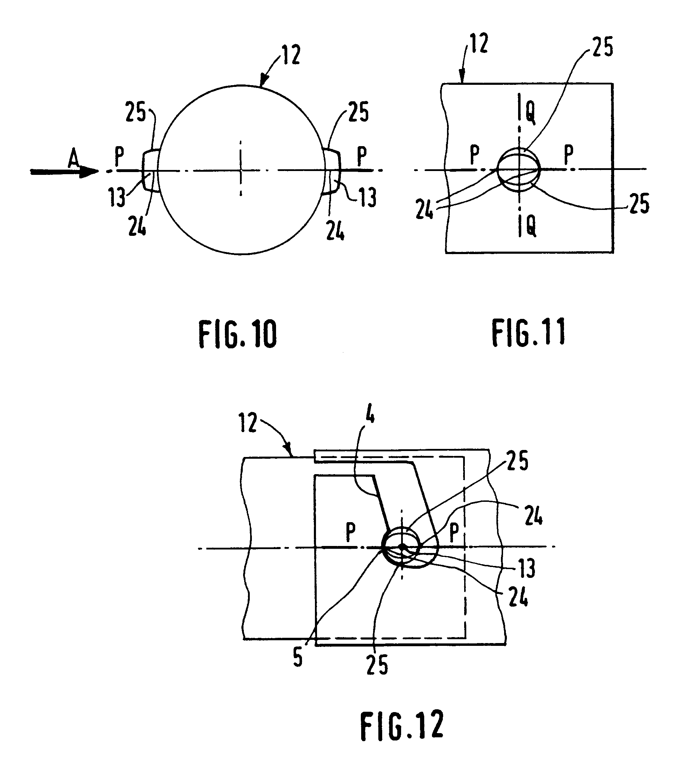

Selon les figures 10 et 11, on voit que les tétons obtenus 13 sont symétriques par rapport à deux plans orthogonaux P et Q. Le plan de symétrie P contient l'axe de révolution de l'ébauche de corps cylindrique 12, et la section des tétons 13 par le plan P contient deux segments de droite sensiblement perpendiculaires au corps cylindrique 12. Les segments de droite 24 seraient obtenus de façon identique comme génératrices rectilignes d'un cylindre 3 selon les figures 1 et 2 au moyen du procédé d'usinage selon les figures 4 et 5.

La section par un plan de symétrie Q du téton 13 perpendiculaire à l'axe de révolution de l'ébauche du corps cylindrique 12 comporte deux segments de développante 25, qui sont des segments de développante correspondant à la forme engendrée par la cavité 15 d'une fraise 14 au cours de l'usinage synchronisé selon les figures 6 et 7. Dans le cas où la cavité 15 est de forme sensiblement cylindrique, les segments 25 sont sensiblement en forme de développante de cercle.

Le système de verrouillage représenté sur la figure 12 schématise un élément de connecteur mâle selon l'invention assemblé à un élément de connecteur femelle de type connu. On voit que le verrouillage s'effectue par l'appui de la partie de courbure sensiblement cylindrique au niveau d'un segment 24 dans l'encoche 5 de verrouillage de la partie femelle. Le segment de droite 24 est avantageusement en appui sensiblement rectiligne au fond de l'encoche 5. On a constaté de manière surprenante que les tétons des éléments mâles selon l'invention présentent des performances et une fiabilité identiques à celles des tétons cylindriques de types connus.

Bien que l'invention ait été décrite en liaison avec un mode de réalisation particulier, diverses variantes et modifications peuvent bien entendu être apportées sans sortir de son cadre comme revendiqué.

## Revendications

1. Procédé pour réaliser un corps cylindrique comportant au moins un téton présentant une portion de base cylindrique en saillie de sa surface extérieure dans lequel on réalise une ébauche de corps cylindrique comportant une collerette périphérique de diamètre extérieur égal à celui du ou des tétons à obtenir et de largeur supérieure au diamètre de la base du ou des tétons à obtenir, on réalise le ou lesdits tétons par fraisage et l'on enlève l'excédent de matière de la collerette en laissant subsister le ou les tétons, caractérisé par le fait que l'on réalise le ou lesdits tétons (13) et l'on enlève l'excédent de matière de la collerette (24) au cours d'une seule opération d'usinage à l'aide d'au moins une fraise (14) comportant une forme en creux (15) et tournant autour d'un axe (R3) perpendiculaire à l'axe longitudinal (R1) de l'ébauche (12), en entraînant en rotation l'ébauche (12) autour de son axe longitudinal (R1) et en entraînant la ou les fraises (14) en rotation en sens opposé autour d'un second axe (R2) parallèle à l'axe longitudinal (R1) de l'ébauche (12), la ou lesdites fraises (14) présentant une surface périphérique coupante sensiblement sphérique en contact avec la surface de l'ébauche (12), la vitesse tangentielle (V2) de rotation de ladite surface périphérique autour dudit second axe (R2) étant égale à la vitesse tangentielle (V1) de rotation de la surface extérieure de l'ébauche (12) autour de son axe (R1) longitudinal.

2. Procédé selon la revendication 1, caractérisé par le fait qu'on usine deux tétons (13) diamétralement opposés sur ladite ébauche de corps cylindrique (12) au cours de la même opération d'usinage.

3. Procédé selon la revendication 2, caractérisé par le fait que l'on usine lesdits tétons (13) à l'aide de deux fraises (14) à surface coupante sensiblement sphérique montés dans des positions diamétralement opposées sur un support tournant (10) autour dudit second axe (R2) de rotation.

4. Dispositif pour la mise en oeuvre du procédé selon l'une des revendications 1 ou 2, comportant au moins une fraise (14) à surface de coupe sensiblement sphérique percée d'une cavité (15), montée rotative sur un support (10) tournant autour d'un second axe (R2) perpendiculaire à l'axe de rotation (R3) de la ou des fraises et parallèle à l'axe de rotation (R1) de l'ébauche (12) et des moyens (17) de synchronisation de la vitesse tangentielle (V2) de rotation de la ou des fraises autour du second axe (R2) avec la vitesse tangentielle (V1) du corps cylindrique (12).

5. Dispositif selon la revendication 3, caractérisé par le fait que le diamètre enveloppe de la ou des fraises (14) est un multiple du diamètre de l'ébauche (12) du corps cylindrique.

## Claims

1. Process for the production of a cylindrical body comprising at least one stud with a cylindrical base portion projecting from its external surface, in which process a blank of cylindrical body is produced which comprises a peripheral collar of external diameter equal to that of the stud or studs to be obtained and of width greater than the diameter of the base of the stud or studs to be obtained, where the said stud or studs are produced by milling and the excess material is removed from the collar leaving the stud or studs, characterized in that the stud or studs (13) are produced and the excess material removed from the collar (24) during a single machining operation using at least one milling cutter (14) with a recessed form (15) and turning about an axis (R3) perpendicular to the longitudinal axis (R1) of the blank (12), causing the blank (12) to rotate about its longitudinal axis (R1) and the milling cutter or cutters (14) to rotate in the opposite direction about a second axis (R2) parallel to the longitudinal axis (R1) of the blank (12), the milling cutter or cutters (14) having an essentially spherical peripheral cutting surface in contact with the surface of the blank (12), the tangential speed (V2) of rotation of which peripheral surface about the said second axis (R2) being equal to the tangential speed (V1) of rotation of the external surface of the blank (12) about its longitudinal axis (R1).

2. Process according to claim 1, characterized in that two diametrically opposed studs (13) are machined on the said blank of cylindrical body (12) during the same machining operation.

3. Process according to claim 2, characterized in that the said studs (13) are machined using two milling cutters (14) of essentially spherical cutting surface mounted in diametrically opposed positions on a support (10) turning about the said second axis (R2) of rotation.

4. Device for implementation of the process according to claim 1 or claim 2, comprising at least one milling cutter (14) with essentially spherical cutting surface pierced with a cavity (15) mounted to rotate on a support (10) turning about a second axis (R2) perpendicular to the axis of rotation (R3) of the milling cutter or cutters and parallel to the axis of rotation (R1) of the blank (12) and means (17) for synchronizing the tangential speed (V2) of rotation of the milling cutter or cutters about the second axis (R2) with the tangential speed (V1) of the cylindrical body (12).

5. Device according to claim 3, characterized in that the envelope diameter of the cutter or cutters (14) is a multiple of the diameter of the blank (12) of the cylindrical body.

## Patentansprüche

1. Verfahren zur Herstellung eines zylindrischen Körpers mit wenigstens einem von seiner äußeren Oberfläche vorspringenden, einen zylindrischen Basisabschnitt bildenden Stift, bei dem man für den zylindrischen Körper einen Rohling herstellt, der einen umlaufenden Kragen besitzt, dessen Durchmesser gleich demjenigen des zu erhaltenden Stiftes oder der zu erhaltenden Stifte ist und dessen Breite größer ist als der Durchmesser der Basis des oder der zu erhaltenden Stifte, wobei man den oder die Stifte durch Fräsen herstellt und das überschüssige Material des Kragens entfernt und dabei den oder die Stifte stehenläßt, dadurch **gekennzeichnet,** daß das Herstellen des oder der Stifte (13) und das Entfernen des überschüssigen Materials des Kragens (24) im Laufe eines einzigen Bearbeitungsvorgangs mit Hilfe wenigstens eines Fräsers (14) erfolgt, der eine ausghöhlte Form (15) aufweist und sich um eine zur Längsachse (R1) des Rohlings (12) senkrechte Achse (R3) dreht, indem man den Rohling (12) um seine Längsachse (R1) rotieren läßt und den oder die Fräser (14) gegensinnig um eine zweite, zu der Längsachse (R1) des Rohlings (12) parallele Achse (R2) rotieren läßt, wobei der oder die Fräser (14) eine im wesentlichen sphärische schneidende Randfläche aufweisen, die mit der Oberfläche des Rohlings (12) in Berührung steht, und die Umfangsgeschwindigkeit (V2) der Drehung dieser Randfläche um die zweite Achse (R2) gleich der Umfangsgeschwindigkeit (V1) der Drehung der äußeren Oberfläche des Rohlings (12) um seine Längsachse (R1) ist.

2. Verfahren nach Anspruch 1, dadurch **gekennzeichnet,** daß man im Laufe desselben Bearbeitungsvorgangs zwei diametral gegenüberliegende Stifte (13) aus dem Rohling (12) für den zylindrischen Körper herausarbeitet.

3. Verfahren nach Anspruch 2, dadurch **gekennzeichnet,** daß man die Stifte (13) mit Hilfe von zwei Fräsern (14) mit im wesentlichen sphärischer Schneidfläche herausarbeitet, die in diametral gegenüberliegenden Positionen auf einem Träger (10) montiert sind, der sich um die zweite Drehachse (R2) dreht.

4. Vorrichtung zur Durchführung des Verfahrens nach Anspruch 1 oder 2, mit wenigstens einem Fräser (14) mit im wesentlichen sphärischer, von elner Höhlung (15) durchbrochenen Schneidfläche, der drehbar an einem Träger (10) montiert ist, der sich um eine zu der Drehachse (R3) des oder der Fräser senkrechte und zur Drehachse (R1) des Rohlings (12) parallele zweite Achse (R2) dreht, und mit Mitteln (17) zur Synchronisation der Umfangsgeschwindigkeit (V2) der Drehung des oder der Fräser um die zweite Achse (R2) mit der Umfangsgeschwindigkeit (V1) des zylindrischen Körpers (12).

5. Vorrichtung nach Anspruch 3, dadurch **gekennzeichnet,** daß der Durchmesser der Hüllkurve des oder der Fräser (14) ein Vielfaches des Durchmessers des Rohlings (12) für den zylindrischen Körper ist.
